# EUROPEAN PATENT SPECIFICATION

(11) **EP 2 898 006 B1**
(45) Date of publication and mention of the grant of the patent: **06.07.2016**
(21) Application number: 13798463.9
(22) Date of filing: 11.11.2013
(51) Int. Cl.: C08J 9/12, C08L 25/06, C08J 9/00

(54) **CELL SIZE ENLARGING AGENT FOR STYRENIC FOAM**
ZELLVERGRÖSSERUNGSMITTEL FÜR STYROLSCHAUMSTOFF
AGENT D'ÉLARGISSEMENT DE DIMENSION DE CELLULE POUR UNE MOUSSE STYRÉNIQUE

(30) Priority: 29.11.2012 US 201261730979 P; 30.01.2013 US 201361758298 P
(43) Date of publication of application: 29.07.2015
(73) Proprietor: Dow Global Technologies LLC, Midland, MI 48674 (US)
(72) Inventor: GIZA, Kendra M., Greenwood, IN 46143 (US); BARGER, Mark A., Midland, MI 48640 (US); FOX, Richard T., Midland, MI 48642 (US); GUERRA, Suzanne M., Lake Jackson, TX 77566 (US); WALTHER, Brian W., Clute, TX 77531 (US)
(74) Representative: Houghton, Mark Phillip
(86) International application number: PCT/US2013/069375
(87) International publication number: WO 2014/085062

(56) References cited:
- US-A- 5 834 126
- US-A- 6 069 183
- US-A1- 2011 196 054
- US-B1- 6 221 928

## Description

### BACKGROUND OF THE INVENTION

### Field of the Invention

The present invention relates to use of a maleic anhydride grafted high density polyethylene polymer as a cell size enlarging additive for styrenic foam and styrenic foam containing the cell size enlarging additive.

### Introduction

Manufacturing polymeric foam is a complex art that becomes even more complex as the number of additives in the polymeric foam formulations increases. The complexity is accentuated when preparing foam using highly nucleating blowing agents such as carbon dioxide. Excessive nucleation during a foaming process can result in undesirably small cell sizes, high density foam or even foam collapse during manufacture. Therefore, there is a need in the art for cell size enlarging agents for use in polymeric foam formulations to ensure the manufacture of polymeric foam having a desirably large cell size is possible.

United States published patent application US 2007/0299152 discloses a number of cell size enlargers for polystyrene foam. Figure 1 of US2007/0299152 reveals that use of polyethylene as a cell size enlarging agent produces the largest cell sizes. Other variations of polyethylene copolymers are also tested in the reference, but reveal a lesser cell size enlarging effect than polyethylene according to the Figure 1.

Some cell size enlarging agents (such as bis(n-decanyl adipate), mineral oil, polyethylene glycol, propylene carbonate, ethylene carbonate, and butylene carbonate) tend to be soluble in polymer matrices and, thereby, plasticize the polymer matrix of resulting polymeric foam. Such plasticization can undesirably affect the physical properties of the resulting foam. For example, plasticizer in a foam can cause the foam to lack dimensional thermal stability at elevated temperatures, thereby reducing the stable use temperature range of the polymeric foam.

It is desirable to identify a cell size enlarging agent that can enlarge the cell size of polymeric foam, preferably even more than polyethylene, but without plasticizing the polymer matrix of the polymeric foam.

### BRIEF SUMMARY OF THE INVENTION

The present invention provides a cell size enlarging agent that can enlarge the cell size of polymeric foam, preferably even more than polyethylene, but without plasticizing the polymer matrix of the polymeric foam

Surprisingly, the cell size enlarging agent is a maleic anhydride-grafted high density polyethylene (MAH-g-HDPE). Part of the discovery of the present invention reveals that when a polymer composition comprises enough MAH-g-HDPE so as to provide six weight-parts or more of grafted maleic anhydride per million weight parts of total polymer composition the polymer composition can be expanded into polymeric foam having a larger cell size than either a similar polymer composition without cell size enlarging agent. The cell size enlarging effect even occurs when using carbon dioxide as a blowing agent.

In a first aspect, the present invention is a styrenic polymer foam comprising a polymer composition that is in a form of a continuous matrix defining multiple cells therein, the polymer composition comprising a first polymer and a second polymer, the first polymer being a maleic anhydride-grafted high density polyethylene and the second polymer being a styrenic polymer resin that is free of grafted maleic anhydride, wherein the first polymer contains on average 0.05 or more weight-parts grafted maleic anhydride based on total weight of the first polymer and wherein the concentration of first polymer in the polymer composition is sufficient to provide at least six weight-parts of grafted maleic anhydride per million weight parts of the polymer composition.

In a second aspect, the present invention is a process for preparing the styrenic polymer foam of the first aspect, the process comprising blending the first and second polymers together to form a polymer mixture and expanding the polymer mixture into a styrenic polymer foam of the first aspect.

The process of the present invention is useful for preparing the styrenic polymer foam of the present invention, which is useful as a thermally insulating material.

### DETAILED DESCRIPTION OF THE INVENTION

Test methods refer to the most recent test method as of the priority date of this document when a date is not indicated with the test method number. References to test methods contain both a reference to the testing society and the test method number. The following test method abbreviations and identifiers apply herein: ASTM refers to ASTM International (formerly American Society for Testing and Materials); EN refers to European Norm; DIN refers to Deutsches Institut fur Normung; and ISO refers to International Organization for Standards.

"Multiple" means two or more. "And/or" means "and, or as an alternative". All ranges include endpoints unless otherwise indicated.

The polymer foam of the present invention is a polymeric foam comprising a polymer composition as a continuous matrix that defines multiple cells therein. The polymer composition of the present invention comprises a combination of a first polymer and a second polymer and consists of all of the polymer in the polymer foam.

The first polymer is a maleic anhydride-grafted high-density polyethylene (MAH-g-HDPE). High density polyethylene (HDPE) is a recognized polymer classification in the art that, for example, has its own recycle classification ("2", or "#2 plastic"). HDPE has a density in a range of 0.93 to 0.97 grams per cubic centimeter (g/cm³) and has little branching.

The first polymer contains maleic anhydride (MAH) grafted onto the HDPE backbone. Desirably, the first polymer contains, on average, 0.05 wt% or more, preferably 0.1 wt% or more, more preferably 0.25 wt% or more, still more preferably 0.5 wt% or more, yet more desirably one wt% or more and even more desirably 1.2 wt% or more grafted MAH relative to total weight of the first polymer. At the same time, the first polymer desirably contains, on average, two wt% or less, preferably 1.9 wt% or less grafted MAH relative to total weight of the first polymer. "On average" means average over all first polymer in the polymer composition. When the amount of grafted MAH is less than 0.05 wt%, the first polymer does not demonstrate any benefit from the presence of the MAH in regards to enlarging cell sizes. When the amount of grafted MAH is more than two wt% undesirable crosslinked gels tend to form.

The total amount of first polymer in the polymer composition is sufficient to provide at least six weight-parts, preferably 10 weight-parts or more, still more preferably 15 weigh-parts or more and can be 20 weight-parts or more, 25 weight-parts or more, 30 weight-parts or more, 35 weight-parts or more or even 40 weight-parts or more of grafted MAH per million weight parts of the polymer composition. At the same time, the total amount of first polymer is desirably such that the total amount of grafted MAH is 50 weight-parts or less, preferably 45 weight-parts or less per million weight parts of the polymer composition.

Surprisingly, the first polymer serves as a cell size enlarging agent that is even more effective than polyethylene. Yet more surprising, the first polymer serves as an effective cell size enlarging agent when using a highly nucleating blowing agent such as carbon dioxide. The first polymer further beneficially serves as a cell size enlarging agent without plasticizing the second polymer or polymer composition. Hence, the first polymer serves as a cell size enlarging agent without detrimentally reducing the mechanical strength of a foam of the present invention by plasticizing the polymer composition serving as the polymer resin matrix of the foam. Determine whether the first polymer plasticizes the second polymer by characterizing the dimensional stability of a resulting foam according to ASTM D 2126-09 (70°C and 97% relative humidity). If the polymer foam has adequate dimensional stability under this test then the first polymer does not plasticize the second polymer. Adequate dimensional stability corresponds to 2% or less change in any dimension and less than 5% change in volume during the testing.

The second polymer is a styrenic polymer resin that is free of grafted MAH. The polymer foam of the present invention is a styrenic polymer foam, which means more than 50 wt% of the polymers in the polymer foam are styrenic polymer resins. Styrenic polymers are polymers that comprise styrene copolymerized into the polymer backbone. Styrenic polymers include styrenic homopolymers (such as polystyrene homopolymer) and styrenic copolymers (such as copolymers of styrene with acrylonitrile, maleic anhydride, acrylic or methacrylic acid or the alkyl esters thereof, including 2-hydroxyethyl acrylate or methacrylate). Particularly desirable styrenic polymers for use in the present invention include copolymers of styrene and acrylonitrile (that is, SAN copolymers), blends of SAN copolymers and blends of SAN copolymers with polystyrene homopolymer.

The polymer composition can consist of only the first and second polymers. Alternatively, the polymer composition can comprise polymers in addition to the first and second polymers. For example, the first polymer can be compounded as a masterbatch (that is, a concentrate) with another polymer such as linear low density polyethylene (LLDPE). The first polymer can be dispersed in LLDPE for ease of implementation into a foaming process. Therefore, the polymer composition can contain polymers other than the first and second polymer. Desirably, the combined weight of first and second polymer is 90 weight-percent (wt%) or more and can be 95 wt% or more even 100 wt% of the total polymer composition weight.

The styrenic polymer foam of the present invention can include additives dispersed within the polymer composition. Desirable additives include any one or combination of more than one additive selected from flame retardants (*for example,* hexabromocyclododecane, tetrabromobisphenol A bis (2,3-dibromopropyl) ether, triphenylphosphate and brominated polymers including brominated styrene-butadiene copolymers), flame retardant synergists (*for example,* aluminum oxide, dicumyl and polycumyl), antioxidant additives, nucleating agents (*for example,* talc, magnesium silicate and calcium carbonate), extrusion aids (*for example,* calcium stearate and barium stearate), infrared attenuating agents (*for example,* graphite, carbon black and titanium dioxide), pigments and colorants. The total amount of additives is desirably less than 10 wt% relative to total styrenic polymer foam weight. The styrenic polymer foam can be free of any one or any combination of more than one of the aforementioned optional additional additives.

The styrenic polymer foam can have essentially any degree of open cell character. For example, the styrenic polymer foam can be an "open cell foam" with an open cell content of more than 30 percent (%), or even an open cell content of 50% or more, 70% or more 90% or more or even 100%. Alternatively, the styrenic polymer foam can be a "closed cell foam" with an open cell content of 30% or less, or even an open cell content of 20% or less, 10% or less, 5% or less, or even 0%. Lower levels of open cell content are generally desirably for thermally insulating applications while high levels of open cell content are generally desirably for applications such as a filtration medium. Determine open cell content according to ASTM D6226-05.

The styrenic polymer foam desirably has a density of 64 kilograms per cubic meter (kg/m³) or less, preferably 40 kg/m³ or less, more preferably 32 kg/m³ or less, and even 30 kg/m³ or less and at the same time desirably 24 kg/m³ or more. Determine density of the styrenic polymer foam according to ISO method 845-85.

The styrenic polymer foam can be an expanded polymer foam, molded polymer foam or an extruded polymer foam. Expanded polymer foam has a characteristic network of dense polymer extending throughout the polymer foam and enclosing groups of cells. The network of dense polymer corresponds to the skin of expandable foam beads that fuse together during expansion of the expandable foam beads when preparing an expanded polymer foam. Molded foam and extruded foam are both free of such a network of dense polymer, which generally provides molded and extruded polymer foam more strength and higher thermally insulating properties. Molded polymer foam is a product of expanding a homogeneous foamable polymer mixture in a mold to form a polymer article in the shape of the mold. Extruded polymer foam is a product of extruding a foamable polymer mixture through a die from a high pressure environment to a lower pressure environment and allowing the extruding foamable polymer mixture to expand into a continuous length of polymer foam.

Prepare the styrenic polymer foam of the present invention by generally blending the first and second polymers together to form a polymer mixture and then expanding the polymer mixture into the styrenic polymer foam of the present invention. Typically, the polymer mixture is a foamable polymer mixture that further comprises a blowing agent. The blowing agent can be any blowing agent for preparing polymer foam. However, the present invention is particularly valuable because the first polymer serves as a cell size enlarging agent even when using a blowing agent comprising, or even consisting of carbon dioxide. Carbon dioxide is a desirable blowing agent because it is a naturally occurring component of air. However, it is also a strongly nucleating blowing agent that tends to produce small cell sizes or even cause collapse in a expandable polymer composition as it expands. Nonetheless, the polymer composition of the present invention enables expansion of the polymer composition into polymer foam having a larger cell size than a polymer composition comprising only the second polymer of the polymer composition. Desirably, the blowing agent is present at a concentration of three weight-parts or more per hundred weight-parts of polymer composition. At the same time, carbon dioxide is typically present at a concentration of 4.5 weight parts or less per hundred weight-parts polymer composition.

Desirably, the process of the present invention is an extrusion foam process wherein the polymer composition is extruded in a molten state through an extruder, mixed with a blowing agent to form a foamable polymer mixture under an initial mixing pressure and then extruded through a die into an environment at a pressure lower than the initial mixing pressure whereupon the foamable polymer mixture expands into an extruded styrenic polymer foam of the present invention.

### Examples

Prepare the following Examples (Exs) and Comparative Examples (Comp Exs) using the following extrusion foaming process. Feed the polymer components and any additives into an extruder and form a melt at a mixing temperature of approximately 200°C. Mix into the melt the blowing agents at the mixing temperature and at a mixing pressure of 11.9-20 mega Pascals (MPa) (119-200 bar) to form a foamable polymer mixture. Cool the foamable polymer mixture to a foaming temperature of 125-130°C. Expel the foamable polymer mixture through a slit die into atmospheric pressure (0.1 MPa, 1.01 bar) and allow it to expand into a polymeric foam.

For each of the Exs and Comp Exs refer to the foamable polymer composition formulation in Table 1. All weight-parts (wt-pts) are relative to 100 wt-pts polymer.

**Table 1.**

| **Component** | **Description** | **weight-parts** |
|---|---|---|
| PS641 | Polystyrene homopolymer having a weight average molecular weight (Mw) of 160,000 g/mol as determined by ASTM D5296. | 84 |
| PS680 | Polystyrene homopolymer having a Mw of 200,000 g/mol as determined by ASTM D5296. | 16 |
| iC4 | isobutane blowing agent | 1 |
| H₂O | water blowing agent | 0.3 |
| CO₂ | carbon dioxide, blowing agent | 3.6 |
| BaSt | barium stearate powder | 0.25 |
| ECN conc. | Epoxy cresol novolac resin compounded at 35 wt% with a polystyrene carrier resin (available from Huntsman Advanced Materials Americas, Inc.; CAS29690-82-2). | 0.43 |
| Coloring | Copper Phthalocyanine compounded within polystyrene carrier resin at a concentration of 40 wt% based on polystyrene weight. | 0.0625 |
| HBCD | hexabromocyclododecane | 2.5 |
| Talc conc. | Magnesium silicate compounded within a polystyrene carrier resin to a concentration of 50 wt% based on polystyrene weight. | 0.2 |

For Comp Ex A (Reference sample without any cell size enlarger) prepare a foam using the above process and composition of Table 1.

For Comp Ex A', prepare a foam in like manner as Comp Ex A except use 4.5 wt-pts CO₂ blowing agent instead of 3.6 wt-pts.

For Comp Ex B (Reference sample with polyethylene cell size enlarger) prepare foam using the above process and composition of Table 1 and further include LLDPE. For Comp Ex B(i) use 0.35 wt-pts LLDPE, for Comp Ex B(ii) use 1.25 wt-pts LLDPE and for Comp Ex B(iii) use 2.5 wt-pts LLDPE. The LLDPE has a melt flow index of 2.3 g/10 min per ASTM D 1238, density at 22.8°C of 917 kilograms per cubic meter per ASTM D792, melting temperature of 123°C per ASTM D 3418 and Vicat Temperature of 98.9°C per ASTM D 1525 (for example, DOWLEX™ PE 2247G, DOWLEX is a trademark of The Dow Chemical Company).

For Ex 1(i), 1(ii) and 1(iii) repeat Comp Ex B(i), B(ii) and B(iii) respectively, but instead of the LLDPE use a MAH-g-HDPE masterbatch containing 15 wt% MAH-g-HDPE in LLDPE. The MAH-g-HDPE contains 1.2 wt% grafted MAH based on total MAH-g-HDPE weight. The HDPE masterbatch contains 0.18 wt% grafted MAH based on total masterbatch weight. The master batch has a Melt Index of 2.0 grams per 10 minutes per ASTM D1238; density of 0.921 grams per cubic centimeters per ASTM D792; for example, AMPLIFY™ TY 1353 functional polymer (AMPLIFY is a trademark of The Dow Chemical Company).

Determine the average vertical (thickness dimension perpendicular to extrusion direction) cell size for the foam samples according to ASTM D 3576. Table 2 identifies the average vertical cell sizes for the various foams with 3.6 wt-pts CO₂ blowing agent.

**Table 2.**

| **Sample** | **Description** | **weight-parts MAH** *(ppm based on polymer composition weight)* | **Cell Size** *(millimeters)* |
|---|---|---|---|
| Comp Ex A | No Cell size enlarging agent | 0 | 0.24 |
| Comp Ex B(i) | 0.35 wt-pts LLDPE | 0 | 0.29 |
| Ex 1(i) | 0.35 wt-pts MAH-g-HDPE masterbatch | 6.3 | 0.32 |
| Comp Ex B(ii) | 1.25wt-pts LLDPE | 0 | 0.31 |
| Ex 1(ii) | 1.25 wt-pts MAH-g-HDPE masterbatch | 22.5 | 0.35 |
| Comp Ex B(iii) | 2.5 wt-pts LLDPE | 0 | 0.32 |
| Ex 1(iii) | 2.5 wt-pts MAH-g-HDPE masterbatch | 45 | 0.42 |

For Comp Ex C(i), C(ii) and C(iii) (high CO₂ Loading with LLDPE), repeat Comp Ex B(i), B(ii) and B(iii) respectively except use 4.5 wt-pts CO₂ in the blowing agent instead of 3.6. For Ex 2(i), 2(ii) and 2(iii) repeat Exs 1(i), 1(ii) and 1(iii) respectively except use 4.5 wt-pts CO₂ in the blowing agent instead of 3.6. Table 3 identifies the average vertical cell sizes for the various foams with 4.5 wt-pts CO₂ blowing agent.

**Table 3.**

| **Sample** | **Description** | **weight-parts MAH** *(ppm based on polymer composition weight)* | **Cell Size** *(millimeters)* |
|---|---|---|---|
| Comp Ex A' | No Cell size enlarging agent | 0 | 0.20 |
| Comp Ex C(i) | 0.35 wt-pts LLDPE | 0 | 0.22 |
| Ex 2(i) | 0.35 wt-pts MAH-g-HDPE masterbatch | 6.3 | 0.26 |
| Comp Ex C(ii) | 1.25wt-pts LLDPE | 0 | 0.24 |
| Ex 2(ii) | 1.25 wt-pts MAH-g-HDPE masterbatch | 22.5 | 0.27 |
| Comp Ex C(iii) | 2.5 wt-pts LLDPE | 0 | 0.26 |
| Ex 2(iii) | 2.5 wt-pts MAH-g-HDPE masterbatch | 45 | 0.33 |

These Examples illustrate that MAH-g-HDPE containing samples show a trend towards a larger cell size foam as compared to foam made without any cell size enlarging agent (Comp Ex A and Comp Ex A') or a foam made with a comparable amount of LLDPE cell size enlarging agent. This observation is true at both 3.6 weight-parts and 4.5 weight-parts carbon dioxide blowing agent and is particularly evident for foam made with higher loadings of cell size enlarging agent.

Characterize the thermal dimensional stability of the foam samples according to ASTM D 2126-09 (70°C, 97% relative humidity) to determine if the polymer matrix of the foam has been plasticized. A plasticized foam will have inadequate dimensional stability in the test. If the foam samples demonstrate 2% absolute change in each dimension or less and less than 5% volumetric change the sample is adequately stable. Each of the samples are adequately stable, as is evident in the data of Table 4. Therefore, the MAH-g-HDPE does not plasticize the polymer matrix.

**Table 4.**

| Example | % Change | | | |
|---|---|---|---|---|
| | Thickness | Length | Width | Volume |
| Comp Ex B(i) | 0.2 | 0.6 | 0.1 | 1.0 |
| Ex 1(i) | 0.3 | 1.1 | 0.2 | 1.6 |
| Ex 1(ii) | 0 | 1.4 | 0.2 | 1.7 |
| Ex 1(iii) | 0.2 | 1.2 | 0.4 | 1.8 |
| Comp Ex C(i) | -1.0 | 2.0 | 0.3 | 0.7 |
| Ex 2(i) | 0 | 1.9 | -0.4 | 1.5 |
| Ex 2(ii) | 1.1 | 1.0 | 0 | 2.1 |
| Ex 2(iii) | -0.5 | 1.4 | -0.1 | 0.8 |

## Claims

1. A styrenic polymer foam comprising a polymer composition that is in a form of a continuous matrix defining multiple cells therein, the polymer composition comprising a first polymer and a second polymer, the first polymer being a maleic anhydride-grafted high density polyethylene and the second polymer being a styrenic polymer resin that is free of grafted maleic anhydride, wherein the first polymer contains on average 0.05 or more weight-parts grafted maleic anhydride based on total weight of the first polymer and wherein the concentration of first polymer in the polymer composition is sufficient to provide at least six weight-parts of grafted maleic anhydride per million weight parts of the polymer composition.

2. The styrenic polymer foam of Claim 1, wherein the first polymer contains on average 0.05 or more and two or less weight-parts grafted maleic anhydride based on total weight of the first polymer.

3. The styrenic polymer foam of Claim 1 or Claim 2, further **characterized by** having a brominated flame retardant dispersed within the polymer composition.

4. The styrenic polymer foam of Claim 3, further **characterized by** the brominated flame retardant being a brominated polymer that is insoluble in the polymer composition.

5. The styrenic polymer foam of any previous Claim, further **characterized by** the combination of first and second polymers being present at a concentration of 90 weight-percent or more based on total polymer composition weight.

6. The styrenic polymer foam of any previous Claim further **characterized by** the polymer composition comprising linear low density polyethylene.

7. A process for preparing the styrenic polymer foam of Claim 1, the process comprising blending the first and second polymers together to form a polymer mixture and expanding the polymer mixture into a styrenic polymer foam of Claim 1.

8. The process of Claim 7, further comprising the step of including in the polymer mixture a blowing agent comprising carbon dioxide to form a foamable mixture and expanding the foamable mixture into a styrenic polymer foam of Claim 1.

9. The process of Claim 8, further **characterized by** the concentration of carbon dioxide being three weight-parts or more per hundred weight parts of polymer composition.

10. The process of any of Claims 7-9, further **characterized by** the process being an extrusion foam process wherein the polymer composition is extruded in a molten state through an extruder, mixed with a blowing agent to form a foamable polymer mixture under an initial mixing pressure and then extruded through a die into an environment at a pressure lower than the initial mixing pressure whereupon the foamable polymer mixture expands into the styrenic polymer foam.

## Patentansprüche

1. Ein Styrolpolymerschaum, beinhaltend eine Polymerzusammensetzung, die die Form einer kontinuierlichen Matrix aufweist, welche zahlreiche Zellen darin definiert, wobei die Polymerzusammensetzung ein erstes Polymer und ein zweites Polymer beinhaltet, wobei das erste Polymer ein mit Maleinsäureanhydrid gepfropftes hochdichtes Polyethylen ist und das zweite Polymer ein Styrolpolymerharz ist, das frei von gepfropftem Maleinsäureanhydrid ist, wobei das erste Polymer durchschnittlich 0,05 oder mehr Gewichtsteile gepfropftes Maleinsäureanhydrid, bezogen auf das Gesamtgewicht des ersten Polymers, enthält, und wobei die Konzentration des ersten Polymers in der Polymerzusammensetzung ausreichend ist, um mindestens sechs Gewichtsteile von gepfropftem Maleinsäureanhydrid pro Million Gewichtsteilen der Polymerzusammensetzung bereitzustellen.

2. Styrolpolymerschaum gemäß Anspruch 1, wobei das erste Polymer durchschnittlich 0,05 oder mehr und zwei oder weniger Gewichtsteile gepfropftes Maleinsäureanhydrid, bezogen auf das Gesamtgewicht des ersten Polymers, enthält.

3. Styrolpolymerschaum gemäß Anspruch 1 oder Anspruch 2, weiter **dadurch gekennzeichnet, dass** er ein bromiertes flammhemmendes Mittel aufweist, das in der Polymerzusammensetzung dispergiert ist.

4. Styrolpolymerschaum gemäß Anspruch 3, weiter **dadurch gekennzeichnet, dass** das bromierte flammhemmende Mittel ein bromiertes Polymer ist, das in der Polymerzusammensetzung unlöslich ist.

5. Styrolpolymerschaum gemäß einem der vorhergehenden Ansprüche, weiter **dadurch gekennzeichnet, dass** die Kombination von erstem und zweitem Polymer in einer Konzentration von 90 Gewichtsprozent oder mehr, bezogen auf das Gesamtgewicht der Polymerzusammensetzung, vorhanden ist.

6. Styrolpolymerschaum gemäß einem der vorhergehenden Ansprüche, weiter **dadurch gekennzeichnet, dass** die Polymerzusammensetzung lineares Polyethylen mit niedriger Dichte beinhaltet.

7. Ein Verfahren zur Herstellung des Styrolpolymerschaums gemäß Anspruch 1, wobei das Verfahren das Vermengen des ersten und zweiten Polymers, um ein Polymergemisch zu bilden, und das Expandieren des Polymergemischs zu einem Styrolpolymerschaum gemäß Anspruch 1 beinhaltet.

8. Verfahren gemäß Anspruch 7, weiter beinhaltend den Schritt des Einschließens eines Treibmittels, beinhaltend Kohlendioxid, in das Polymergemisch, um ein schäumbares Gemisch zu bilden, und das Expandieren des schäumbaren Gemisches zu einem Styrolpolymerschaum gemäß Anspruch 1.

9. Verfahren gemäß Anspruch 8, weiter **dadurch gekennzeichnet, dass** die Konzentration von Kohlendioxid drei Gewichtsteile oder mehr pro hundert Gewichtsteilen der Polymerzusammensetzung beträgt

10. Verfahren gemäß einem der Ansprüche 7-9, weiter **dadurch gekennzeichnet, dass** das Verfahren ein Extrusionsschaumverfahren ist, wobei die Polymerzusammensetzung in einem geschmolzenen Zustand durch einen Extruder extrudiert wird, mit einem Treibmittel gemischt wird, um ein schäumbares Polymergemisch unter einem anfänglichen Mischdruck zu bilden, und dann durch eine Düse in eine Umgebung bei einem Druck extrudiert wird, der niedriger als der anfängliche Mischdruck ist, woraufhin das schäumbare Polymergemisch zu einem Styrolpolymerschaum expandiert.

## Revendications

1. Une mousse polymère styrénique comprenant une composition polymère qui est sous une forme d'une matrice continue définissant de multiples cellules à l'intérieur de celle-ci, la composition polymère comprenant un premier polymère et un deuxième polymère, le premier polymère étant un polyéthylène haute densité greffé anhydride maléique et le deuxième polymère étant une résine polymère styrénique qui est exempte d'anhydride maléique greffé, le premier polymère contenant en moyenne 0,05 partie en poids ou plus d'anhydride maléique greffé rapporté au poids total du premier polymère et la concentration en premier polymère dans la composition polymère étant suffisante pour fournir au moins six parties en poids d'anhydride maléique greffé par million de parties en poids de la composition polymère.

2. La mousse polymère styrénique de la revendication 1, le premier polymère contenant en moyenne 0,05 ou plus et deux parties en poids ou moins d'anhydride maléique greffé rapporté au poids total du premier polymère.

3. La mousse polymère styrénique de la revendication 1 ou de la revendication 2, **caractérisée en outre par** la présence d'un retardateur de flammes bromé dispersé dans la composition polymère.

4. La mousse polymère styrénique de la revendication 3, **caractérisée en outre par le fait que** le retardateur de flammes bromé est un polymère bromé qui est insoluble dans la composition polymère.

5. La mousse polymère styrénique de n'importe quelle revendication précédente, **caractérisée en outre par le fait que** la combinaison d'un premier et d'un deuxième polymère est présente à une concentration de 90 pour cent en poids ou plus rapporté au poids total de la composition polymère.

6. La mousse polymère styrénique de n'importe quelle revendication précédente, **caractérisée en outre par le fait que** la composition polymère comprend un polyéthylène basse densité linéaire.

7. Un procédé de préparation de la mousse polymère styrénique de la revendication 1, le procédé comprenant le mélange homogène des premier et deuxième polymères ensemble pour former un mélange polymère et l'expansion du mélange polymère en une mousse polymère styrénique de la revendication 1.

8. Le procédé de la revendication 7, comprenant en outre l'étape d'inclusion, dans le mélange polymère, d'un agent gonflant comprenant du dioxyde de carbone pour former un mélange moussant et d'expansion du mélange moussant en une mousse polymère styrénique de la revendication 1.

9. Le procédé de la revendication 8, **caractérisé en outre par le fait que** la concentration en dioxyde de carbone est de trois parties en poids ou plus par cent parties en poids de composition de polymère.

10. Le procédé de n'importe lesquelles des revendications 7 à 9, **caractérisé en outre par le fait que** le procédé est un procédé de moussage par extrusion dans lequel la composition polymère est extrudée dans un état fondu au travers d'une extrudeuse, mélangée à un agent gonflant pour former un mélange polymère moussant sous une pression de mélange initiale puis extrudée au travers d'une filière dans un environnement à une pression plus basse que la pression de mélange initiale, après quoi le mélange polymère moussant se dilate dans la mousse polymère styrénique.
